# EUROPÄISCHE PATENTSCHRIFT

(11) **EP 1 617 096 B1**
(45) Veröffentlichungstag und Bekanntmachung des Hinweises auf die Patenterteilung: **09.03.2011**
(21) Anmeldenummer: 05014404.7
(22) Anmeldetag: 02.07.2005
(51) Int. Cl.: F16D 21/06, F16D 13/70

(54) **Übertragungsanordnung zur Momentübertragung zwischen Baueinheiten eines Kraftfahrzeug-Antriebsstrangs**
Torque transmission assembly between units of a motor vehicle drive train
Dispositif de transmission de couple entre les composants dans une transmission d'un véhicule automobile

(30) Priorität: 16.07.2004 DE 102004034392
(43) Veröffentlichungstag der Anmeldung: 18.01.2006
(73) Patentinhaber: ZF Friedrichshafen AG, 88046 Friedrichshafen (DE)
(72) Erfinder: Carlson, Cora, 97456 Dittelbrunn (DE); Vogt, Sebastian, 97616 Bad Neustadt (DE)

(56) Entgegenhaltungen:
- EP-A1- 0 381 829
- DE-A1- 10 241 027
- DE-A1- 10 316 445
- DE-A1- 19 959 962
- DE-A1-102004 001 541

## Beschreibung

Die Erfindung betrifft eine Übertragungsanordnung zur Momentenübertragung zwischen zwei im Momentenübertragungsverbindung zu bringenden oder stehenden Baueinheiten eines Kraftfahrzeug-Antriebsstrangs, umfassend eine Mehrzahl von elastischen Verbindungselementen, die zumindest im im Antriebsstrang montierten Zustand sich bezogen auf einen Umfang näherungsweise in Umfangsrichtung oder in Tangentialrichtung um eine Achse der Übertragungsanordnung erstrecken, die im im Antriebsstrang montierten Zustand zumindest näherungsweise einer Drehachse des Antriebsstrangs entspricht.

Eine derartige Übertragungsanordnung ist aus der DE 102 41 027 A1 bekannt, es wird auf die dortigen Fig. 7 und 8 verwiesen. Eine Torsionsschwingungsdämpferanordnung ist mit einem sich von einem Deckscheibenelement erstreckenden Verbindungstopf ausgeführt, der nach radial außen greifende Kupplungsvorsprünge aufweist. Diesen Kupplungsvorsprüngen sind nach radial außen greifende Kupplungsvorsprünge einer Widerlagerplatte 18 einer Doppelkupplung zugeordnet. Die Kupplungsvorsprünge des Verbindungstopfes und die Kupplungsvorsprünge der Widerlagerplatte sind durch näherungsweise in Umfangsrichtung sich erstreckende Blattfederelemente verbunden.

Nachteilig an einer von der Anmelderin in der Vergangenheit erwogenen Anordnung der angegebenen Art ist, dass zur Herstellung der Momentenübertragungsverbindung zwischen den betreffenden Baueinheiten herkömmlich, nach Annäherung einer der beiden Baueinheiten an die andere Baueinheit, der Momentenübertragungsweg an den Blattfederelementen zu schließen ist durch Verbinden der Blattfederelemente mit zugeordneten Befestigungsstellen einer oder beider Baueinheiten. Solange die Blattfedern noch nicht beidseitig an den Befestigungsstellen der Baueinheiten angebunden sind, sind die Blattfedererlemente relativ leicht beweglich und können noch keine Zentrierungsfunktion für die Zentrierung der einen Baueinheit relativ zur anderen übernehmen. Selbst für ihre eigenen Befestigungsabschnitte, die mit zugeordneten Befestigungsstellen zu verbinden sind, können die in der Regel nur einer Stelle an einer jeweiligen Befestigungsstelle einer der Baueinheiten schon angebrachten Blattfederelemente kaum eine Zentrierungs- oder Positionierungsfunktion übernehmen, so dass schlimmstenfalls mittels eines zusätzlichen Positionierungshilfsmittels die Befestigungsabschnitte der Blattfederelemente richtig in Bezug auf die Befestigungsstellen der anderen Baueinheit so ordnungsgemäß positioniert werden müssen, dass die Herstellung der Koppelverbindung etwa durch Vernieten mittels eines entsprechenden Werkzeugs möglich ist.

Eine weitere Übertragungsanordnung ist aus der EP0 381 829 bekannt.

Der Erfindung liegt nach einem ersten Aspekt die Aufgabe zugrunde, eine Übertragungsanordnung bereitzustellen, die einen erleichterten Zusammenbau eines Kraftfahrzeug-Antriebsstrangs oder Kraftfahrzeug-Antriebsstrang-Abschnitts ermöglicht.

Die Erfindung betrifft nach einem zweiten Aspekt einen Kraftfahrzeug-Antriebsstrang mit einem direkt oder indirekt über eine Übertragungsanordnung mit einer Antriebseinheit in Momentenübertragungsverbindung stehenden Kupplungseinheit. Die Kupplungsanbindung an eine Antriebswelle erfolgt herkömmlich beispielsweise durch eine so genannte Flexplatte (Flexplate), die eine topfartige Geometrie aufweist. Nachteilig bei der direkten Anbindung einer Flexplatte einerseits an eine antriebsseitige Welle und andererseits an eine Kupplungseinheit (allgemein Kupplungseinrichtung) ist, dass hinsichtlich der Flexplatte häufig keine Ausgestaltung derart möglich ist, dass die Flexplatte einerseits stark genug ist, um das antriebsseitige Drehmoment auf die Kupplung zu übertragen, und andererseits weich genug ist, um eine durch leichten Schiefstand zwischen Antriebswelle und Kupplungseinrichtung bewirkte Taumelbewegung und axiale Relativbewegungen durch die Flexplatte abzufangen. Starre Flexplatten haben daher den Nachteil eines mangelnden Taumelausgleichs, während bekannte taumelweiche Flexplatten über ihre Lebensdauer eine zu geringe Festigkeit aufweisen.

Nach dem zweiten Aspekt ist es daher eine Aufgabe der Erfindung, eine Übertragungsanordnung zur Momentenübertragung zwischen einer Antriebswelle und einer Kupplungsanordnung sowie einen eine derartige Übertragungsanordnung umfassenden Kraftfahrzeug-Antriebsstrang anzugeben, die einerseits das Drehmoment bei hoher Lebensdauer übertragen können und andererseits eine Taumelbewegung oder/und axiale Schwingungsbewegung zwischen der Antriebswelle und der Kupplungsanordnung ausgleichen können.

Zur Lösung wenigstens einer dieser Aufgaben schlägt die Erfindung eine Übertragungsanordnung zur Momentenübertragung zwischen zwei im Momentenübertragungsverbindung zu bringenden oder stehenden Baueinheiten eines Kraftfahrzeug-Antriebsstrangs vor, umfassend ein topfartiges oder scheibenartiges Verbindungsglied auf, das zentrisch fest mit einer Drehkomponente, insbesondere Drehwelle, einer Baueinheit des Antriebsstrangs, etwa einer Antriebswelle eines Getriebes oder Abtriebswelle einer Antriebseinheit, zu verbinden ist, eine Mehrzahl von elastischen Verbindungselementen, die im im Antriebsstrang montierten Zustand sich bezogen auf einen Umfang näherungsweise in Umfangsrichtung oder in Tangentialrichtung um eine Achse der Übertragungsanordnung erstrecken, die im im Antriebsstrang montierten Zustand zumindest näherungsweise einer Drehachse des Antriebsstrangs entspricht. Erfindungsgemäß ist vorgesehen, dass die Übertragungsanordnung ein mit einer der Baueinheiten gekoppeltes oder koppelbares Ringglied umfasst, mit dem die elastischen Verbindungselemente fest verbunden sind, wobei die Verbindungselemente von einer Ringfläche oder einem jeweiligen Flächenabschnitt des Ringliedes ausgehend in Richtung der Achse vorstehen und das topfartige Verbindungsglied (52; 52a) als Flexptatte ausgebildet ist.

Das Ringglied gibt den elastischen Verbindungselementen, beispielsweise Blattfederelementen, einen Zusammenhalt. Wird die Übertragungsanordnung mit den Verbindungselementen oder einer mit diesen fest verbundenen weiteren Komponente der Übertragungsanordnung an einer der beiden in Momentenübertragungsverbindung zu bringenden Baueinheiten angebracht, so steht das Ringglied bereit, um mit der anderen Baueinheit verbunden zu werden und so die Momentenübertragungsverbindung zu schließen. Der Momentenübertragungsweg wird dann also nicht an den nur einseitig angebundenen Verbindungselementen, sondern an dem die Verbindungselemente zusammen haltenden und zentrierenden Ringglied hergestellt. Die Übertragungsanordnung kann so sofort, schon vor vollständiger Herstellung der Momentenübertragungsverbindung, eine Zentrierungsfunktion übernehmen, und es sind vor allem keine Positionierungshilfen nötig, die die Verbindungsabschnitte der Verbindungselemente in Bezug auf Gegenverbindungsabschnitte der an die erstgenannte Baueinheit herangeführten Baueinheit erforderlich.

Etwaiger Achsversatz oder Schiefstand zwischen der Antriebswelle, insbesondere einer Kurbelwelle, und der Kupplungsanordnung bzw. einer Getriebeeingangswelle kann nach diesem Vorschlag besonders wirkungsvoll ausgeglichen werden, weil das topfartige Verbindungsglied bezüglich einer durch den Achsversatz oder Schiefstand erzeugten Taumelbewegung derart weich ausgebildet werden kann, dass es diese Taumelbewegung ohne Rückwirkung auf die gekoppelten Baueinheiten, etwa auf die Antriebswelle bzw. Kupplungsanordnung, auffängt. Die Drehmomentübertragung kann demgegenüber in Umfangsrichtung über einen Abschnitt oder Abschnitte des Verbindungsglieds erfolgen, welche bezüglich dieser Richtung relativ starr und stabil sind und sich daher auch durch hohe Lebensdauer auszeichnen.

Es wird vor allem daran gedacht, dass das Ringglied als Ringscheibenglied oder Ringstabglied ausgeführt ist, dessen Erstreckung in radialer Richtung seine Erstreckung in axialer Richtung deutlich übersteigt. Das Ringglied soll gemäß diesem Weiterbildungsvorschlag also keine wesentliche axiale Überbrückungsfunktion im Antriebsstrang erfüllen, sondern in erster Linie als Zentrierungsmittel und Verbindungseinrichtung dienen.

Gemäß einer bevorzugten Ausgestaltung stehen die elastischen Verbindungselemente von einer Ringfläche oder einem jeweiligen Flächenabschnitt des Ringglieds ausgehend in Richtung der Achse vor, so dass sie eine gewisse axiale Überbrückungsfunktion erfüllen. Es ist durchaus aber auch möglich, dass sich die Verbindungselemente jeweils von einem Befestigungsflansch des Ringglieds näherungsweise nur entlang einer Umfangsrichtung vom Befestigungsflansch weg erstrecken.

Man kann vorsehen, dass die Verbindungselemente jeweils derart an einem Befestigungsflansch des Ringglieds befestigt sind, dass sie sich in beiden Umfangsrichtungen bzw. Tangentialrichtungen vom Befestigungsflansch weg erstrecken. Es können die Verbindungselemente beispielsweise in einem mittleren Bereich an einem Befestigungsflansch des Ringglieds befestigt sein und mit ihren in die eine bzw. andere Umfangsrichtung gegenüber dem Befestigungsflansch versetzten Endabschnitt an einer weiteren Komponenten der Übertragungsanordnung oder einer der Baueinheiten verbunden oder verbindbar sein.

Eine andere Möglichkeit ist, dass die Verbindungselemente sich jeweils zwischen zwei Befestigungsflanschen des Ringglieds in Umfangsrichtung in Tangentialrichtung erstrecken. In diesem Fall können beispielsweise mittlere Abschnitte der Verbindungselemente für die Verbindung mit einer anderen Komponente der Übertragungsanordnung bzw. mit einer der Baueinheiten dienen.

Gegenüber diesen Ausgestaltungsmöglichkeiten ist es aber bevorzugt, dass die Verbindungselemente mit einem Endabschnitt mit dem Ringglied verbunden sind und dass die anderen Endabschnitte für die Verbindung mit einer anderen Komponente der Übertragungsanordnung bzw. mit einer der Baueinheiten dienen.

Es wird vor allem daran gedacht, dass die Verbindungselemente parallel zur Achse der Übertragungsanordnung elastisch sind und senkrecht zur Achse, insbesondere in Umfangsrichtung bzw. Tangentialrichtung, starr. Soweit es um Verbindungselemente geht, ist die Übertragungsanordnung dann gut für eine weitgehend starre Momentenübertragungsverbindung mit einer hohen Momentenübertragungsfähigkeit geeignet, wobei zugleich aber axiale Schwingungen und Taumelbewegungen gut aufgenommen werden können.

Wenigstens ein Verbindungselement, vorzugsweise alle Verbindungselemente können wenigstens eine streifenartige Blattfeder umfassen. Es wird vor allem daran gedacht, dass die Verbindungselemente jeweils von einer oder mehreren Blattfedern gebildet sind. Als Blattfedern können insbesondere so genannte Tangentialblattfedern eingesetzt werden. Wenigstens ein Verbindungselement bzw. ein jeweiliges Verbindungselement kann mehrere übereinander liegende Blattfedern umfassen. Dicke, Anzahl und Form der Blattfedern können je nach Anforderung variiert werden.

Hinsichtlich der Gestalt der Blattfedern bestehen grundsätzlich keine Einschränkungen. Die Blattfedern können beispielsweise gekröpft sein, können geradlinig verlaufen für eine Erstreckung in Tangentialrichtung oder können gekrümmt verlaufen für eine Erstreckung in Umfangsrichtung.

Eine bevorzugte Ausführungsform zeichnet sich dadurch aus, dass die Übertragungsanordnung genau ein Ringglied aufweist. In diesem Fall kann das Ringglied zur Verbindung mit der einen Baueinheit und können die Verbindungselemente zur Verbindung mit der anderen Baueinheit vorgesehen sein.

Weiterhin kann der Vorteil erreicht werden, dass axiale Schwingungen, etwa der Antriebswelle, insbesondere einer Kurbelwelle, ebenfalls von der ausgekoppelten Baueinheit, etwa Kupplungsanordnung, entkoppelt werden können, weil das topfartige Verbindungsglied und/oder die Verbindungselemente in axialer Richtung relativ weich ausgebildet werden können, ohne die Lebensdauer und Drehmomentübertragungseigenschaften der Gesamtanordnung einzuschränken. Demgemäß sind in einem vorteilhaften Ausführungsbeispiel der Erfindung die Verbindungselemente in einer Richtung parallel zur Antriebswelle elastisch und in einer Richtung senkrecht zur Antriebswelle, insbesondere in Umfangsrichtung, starr.

Das topfartige Verbindungsglied, das beispielsweise in einem Tiefziehverfahren hergestellt ist, ist vorzugsweise als Flexplatte (Flexplate bzw. flexible Platte) ausgebildet.

Es wird in diesem Zusammenhang weiterbildend vorgeschlagen, dass die Übertragungselemente fest mit dem Verbindungsglied verbunden sind, zur Momentenübertragung zwischen dem Ringglied und dem Verbindungsglied. Das Ringglied dient dann zur Verbindung mit der anderen Baueinheit.

Nach einer weiteren Ausführungsform weist die Übertragungsanordnung zwei Ringglieder auf, zwischen denen sich die Verbindungselemente erstrecken, zur Momentenübertragung zwischen den Ringgliedern. Es wird in diesem Zusammenhang daran gedacht, dass das eine Ringglied zur Verbindung mit der einen Baueinheit und das andere Ringglied zur Verbindung mit der anderen Baueinheit vorgesehen ist.

Wenn hier davon die Rede ist, dass eine Komponente, etwa das Ringglied bzw. die Ringglieder, das Verbindungsglied bzw. die Verbindungselemente zur Verbindung mit einer jeweiligen Baueinheit vorgesehen sind bzw. mit einer Drehkomponente zu verbinden sind, so ist in diesem Zusammenhang speziell daran zu denken, dass die betreffende Komponente für eine solche Verbindung funktionalisiert ist. Beispielsweise kann der Durchmesser des betreffenden Ringglieds geeignet angepasst sein und es können die betreffenden Komponenten mit geeigneten Verbindungselementen oder/und Positionierungselementen ausgeführt sein. Beispielsweise kann in mindestens einem Element oder Glied wenigstens eine Positionierungsöffnung vorgesehen sein, in die ein auf Seiten einer der beiden Baueinheiten angeordnetes Positionierungselement einführbar ist. Ferner kann an mindestens einem Element oder Glied ein Positionierungselement vorgesehen sein, das in einer auf Seiten einer der beiden Baueinheiten angeordnete Positionierungsöffnung einführbar ist. Es wird vor allem daran gedacht, dass das Ringglied oder/und - insbesondere im Falle einer Ausführung der Übertragungsanordnung ohne das topfartige oder scheibenartige Verbindungsglied - wenigstens ein oder vorzugsweise mehrere der Verbindungselemente oder - wenn vorgesehen - das Verbindungsglied - mit solchen Positionierungsmitteln ausgeführt ist.

Es wird vor allem daran gedacht, dass die Verbindungselemente an dem Ringglied formschlüssig angebracht sind, vorzugsweise mit diesem verschraubt oder vernietet sind. Bezug nehmend auf die Ausführungsform mit dem Verbindungsglied wird vor allem daran gedacht, dass die Verbindungselemente an diesem formschlüssig angebracht sind, vorzugsweise mit diesem verschraubt oder vernietet sind.

Wie schon angedeutet, kann das Ringglied mit Befestigungseinrichtungen zum Befestigen an einer der Baueinheiten, vorzugsweise mit Öffnungen zum Verschrauben oder Vernieten mit der Baueinheit, ausgeführt sein. Bezug nehmend auf die Ausgestaltung ohne das topfartige oder scheibenartige Verbindungsglied wird in entsprechender Weise vorgeschlagen, dass die Verbindungselemente mit Befestigungseinrichtungen zum Befestigen an einer der Baueinheiten, vorzugsweise mit Öffnungen zum Verschrauben oder Vernieten mit der Baueinheit, ausgeführt sind.

Bezug nehmend auf die Ausgestaltung mit dem Verbindungsglied wird in entsprechender Weise vorgeschlagen, dass das Verbindungsglied mit Befestigungseinrichtungen zum Befestigen an einer der Baueinheiten, vorzugsweise mit Öffnungen zum Verschrauben oder Vernieten mit der Baueinheit, ausgeführt ist.

Bereitgestellt wird vor allem eine solche Übertragungsanordnung, die vorgesehen ist zur Momentenübertragung zwischen zwei Baueinheiten der Gruppe: Antriebseinheit, insbesondere Brennkraftmaschine; Kupplungseinheit, gewünschtenfalls Doppelkupplungseinheit; Getriebe, gegebenenfalls Lastschaltgetriebe; Torsionsschwingungsdämpfereinheit, insbesondere Zwei-Massen-Schwungrad-Einheit.

Die Erfindung stellt ferner einen Kraftfahrzeug-Antriebsstrang oder einen Kraftfahrzeug-Antriebsstrang-Abschnitt bereit, mit wenigstens einer erfindungsgemäßen Übertragungsanordnung zwischen zwei zugeordneten Baueinheiten der Gruppe: Antriebseinheit, insbesondere Brennkraftmaschine; Kupplungseinheit, gewünschtenfalls Doppelkupplungseinheit; Getriebe, gegebenenfalls Lastschaltgetriebe; Torsionsschwingungsdämpfereinheit, insbesondere Zwei-Massen-Schwungrad-Einheit.

Es ist darauf hinzuweisen, dass es durchaus in Betracht kommt, in einem Kraftfahrzeug-Antriebsstrang zwei erfindungsgemäße Übertragungsanordnungen vorzusehen, beispielsweise eine erfindungsgemäße Übertragungsanordnung zwischen der Antriebseinheit und einer Torsionsschwingungsdämpfereinheit und eine weitere erfindungsgemäße Übertragungsanordnung zwischen der Torsionsschwingungsdämpfereinheit und einer Kupplungseinheit.

Bereitgestellt wird insbesondere ein Kraftfahrzeug-Antriebsstrang, der wenigstens eine erfindungsgemäße Übertragungsanordnung und eine direkt oder indirekt über die Übertragungsanordnung mit einer Antriebseinheit in Momentenübertragungsverbindung stehende Kupplungseinheit umfasst. Bei der Kupplungseinheit kann es sich um eine Einfach-Kupplungseinheit oder um eine so genannte Doppelkupplungs-Einheit mit zwei unabhängig voneinander ein- und auskuppelbaren Kupplungsanordnungen handeln.

Es wird vor allem daran gedacht, dass die Übertragungsanordnung unmittelbar an der Kupplungseinheit angebunden ist, und zwar vorzugsweise über das/ein Ringglied.

Bezug nehmend auf die Ausgestaltung der Übertragungsanordnung mit dem Verbindungsglied wird vor allem daran gedacht, dass das Verbindungsglied auf Seiten einer Antriebseinheit des Antriebsstrangs angeordet und mit einer Antriebswelle (Abtriebswelle) der Antriebseinheit verbunden ist.

Gemäß einer Ausgestaltung weist der Kraftfahrzeug-Antriebsstrang eine Torsionsschwingungsdämpfereinheit, beispielsweise eine Zwei-Massen-Schwungrad-Einheit auf, die antriebseinheitsseitig angeordnet ist. Die Torsionsschwingungsdämpfereinheit kann direkt an einer Antriebswelle (Abtriebswelle) der Antriebseinheit angeordnet sein oder über eine erfindungsgemäße Übertragungsanordnung mit dieser in Verbindung stehen. Betreffend die Momentenübertragungsverbindung zwischen Torsionsschwingungsdämpfereinheit und Kupplungseinheit wird vorgeschlagen, dass die Übertragungsanordnung über die Verbindungselemente oder das Ringglied bzw. ein Ringglied an der Torsionsschwingungsdämpfereinheit angebunden ist. Im Falle der Ausbildung der Übertragungsanordnung mit nur einem Ringglied ist es bevorzugt, dass die Übertragungsanordnung über die Verbindungselemente an der Torsionsschwingungsdämpfereinheit angebunden ist.

Die Erfindung stellt ferner bereit ein Verfahren zum Zusammenbauen eines Kraftfahrzeug-Antriebsstrangs oder eines Kraftrahrzeug-Antriebsstrang-Abschnitts, beispielsweise eines erfindungsgemäßen Kraftfahrzeug-Antriebsstrangs wie vorangehend angesprochen. Ein erfindungsgemäßes Verfahren weist die folgenden Schritte auf:
- Bereitstellen wenigstens einer erfindungsgemäßen Übertragungsanordnung,
- Montieren der Übertragungsanordnung an einer von zwei der mittels der Übertragungsanordnung in Momentenübertragungsverbindung zu bringenden Baueinheiten, derart, dass das Ringteil oder eines der Ringteile für die Koppelung mit der anderen der beiden Baueinheiten bereit steht,
- Heranführen der anderen der beiden Baueinheiten an das Ringteil,
- Verbinden des Ringteils mit der anderen der beiden Baueinheiten, um die Momentenübertragungsverbindung herzustellen.

Die Erfindung wird im Folgenden anhand von in den Figuren gezeigten Ausführungsbeispielen näher erläutert.
- Fig. 1: zeigt ein Doppelkupplungsmodul oder eine Doppelkupplungsbaueinheit mit einer eine Flexplatte, ein Ringglied und Blattfedern umfassenden Übertragungsanordnung zur Anbindung an eine Antriebseinheit.
- Fig. 2: zeigt die Übertragungsanordnung gemäß Fig. 1 in einer perspektivischen Ansicht entsprechend einer Sichtrichtung von der Antriebseinheit her im an der Antriebswelle der Antriebseinheit unmontierten Zustand und ohne die Doppelkupplung.
- Fig. 3: zeigt eine weitere Ansicht auf die Flexplatte und die übrigen Bestandteile der Übertragungsanordnung.
- Fig. 4: zeigt eine vergrößerte Ansicht eines Umfangsrandbereichs der Übertragungsanordnung gemäß Fig. 3.
- Fig. 5: zeigt ein Einfach-Kupplungsmodul oder eine Einfach-Kupplungsbaueinheit mit einer eine Flexplatte aufweisenden Übertragungsanordnung zur Anbindung an eine Antriebseinheit.
- Fig. 6: zeigt eine Einfach-Kupplungsbaueinheit und eine als Zwei-Massen-Schwungrad ausgeführte Torsionsschwingungsdämpferbaueinheit, die über eine ein Ringglied und Blattfedern aufweisende Übertragungsanordnung in Drehmomentenübertragungsverbindung stehen.
- Fig. 7: zeigt eine weitere Einfach-Kupplungsbaueinheit, die über eine ein Ringglied und Tangentialblattfedern aufweisende Übertragungsanordnung an einer Torsionsschwingungsdämpferbaueinheit angebunden ist.
- Fig. 8: zeigt eine Doppelkupplungsbaueinheit, die über eine Blattfedern und ein Ringglied aufweisende Übertragungsanordnung an einer als Zwei-Massen-Schwungrad ausgeführten Torsionsschwingungsdämpferbaueinheit angebunden ist.
- Fig.9: zeigt in den Teilfiguren 9a und 9b zwei alternative Ausgestaltungen der das Ringglied und die Blattfedern aufweisenden Übertragungsanordnung.
- Fig. 10: zeigt ausgehend von der Ausführungsform gemäß Fig. 9b eine Ausführungsvariante mit gekröpften Blattfedern.

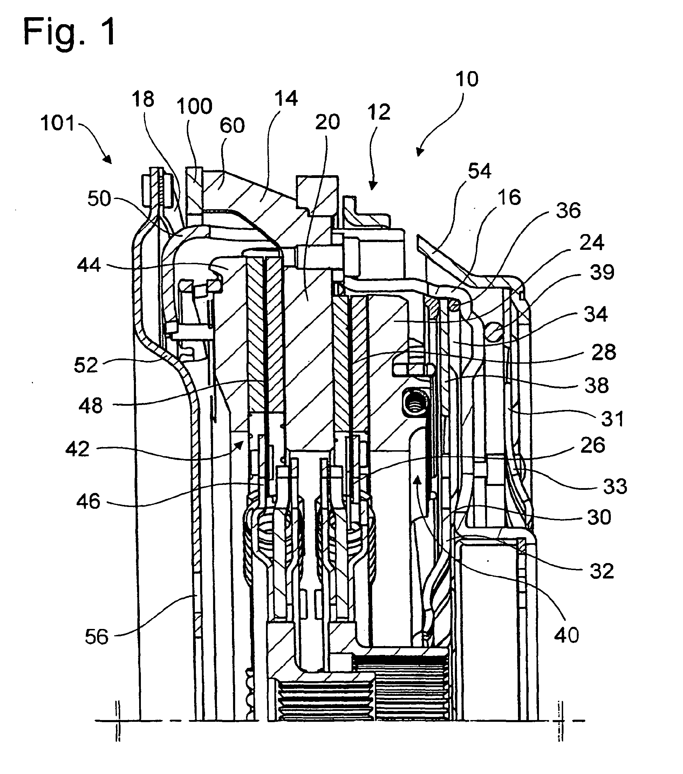

In Fig. 1 ist eine Kupplungsanordnung 10 in Form einer Doppelkupplung dargestellt. Diese Kupplungsanordnung 10 umfasst eine Gehäuseanordnung 12, die wiederum zwei Gehäusebauteile 14, 16 umfasst. Das insbesondere als Gussteil hergestellte Gehäusebauteil 14 ist in seinem radial äußeren, sich näherungsweise axial erstreckenden Bereich an einem Ringglied 100 angebunden, das zu einer eine Flexplatte 52 und elastische Verbindungselemente 18 vorzugsweise in Form von Blattfedern aufweisenden Übertragungsanordnung 101 gehört. Die Verbindungselemente 18 verbinden das Ringglied 100 und einen radial äußeren Umfangsrandbereich der Flexplatte 52. Die Flexplatte 52 dient zur Ankopplung der Kupplungsbaueinheit an einer Antriebswelle einer Antriebseinheit, insbesondere Brennkraftmaschine, die nicht dargestellt ist. Ein ringartiger Abschnitt 20 des Gehäuseteils 14 dient als Zwischenplatte der Doppelkupplung.

Wie schon angesprochen, erfolgt die antriebsseitige Ankopplung der Kupplungsanordnung 10 über die vom Ringglied, den Verbindungselementen 18 und der Flexplatte 52 gebildeten Übertragungsanordnung, welche kupplungsseitig, mittels des Ringglieds 100, eine Drehmomentenübertragung zum Gehäuseteil 14 bzw. der Zwischenplatte 20 bewirkt. Die Flexplatte 52 weist Schrauböffnungen 56 auf zum Anschrauben der Flexplatte an der Antriebswelle der Antriebseinheit, insbesondere einer Kurbelwelle.

In dem Gehäuseteil 16 ist eine erste Anpressplatte 24 derart angeordnet, dass sie beispielsweise über Tangentialblattfedern oder dergleichen mit dem Gehäuseteil 16 im Wesentlichen drehfest gekoppelt ist, in Richtung einer Drehachse jedoch verlagerbar ist. Zwischen der Anpressplatte 24 und der Zwischenplatte 20 liegt eine erste Kupplungsscheibe 26 mit ihren Reibbelägen 28. Um die erste Anpressplatte 24 in Richtung auf die Zwischenplatte 20 vorzuspannen und dabei die Kupplungsscheibe einzuspannen, ist eine erste Einrückkraftübertragungshebelanordnung 30 vorgesehen. Sie umfasst eine Mehrzahl von in Umfangsrichtung aufeinander folgenden Hebelabschnitten 32, die sich in ihrem radial äußeren Endbereich 34 am Gehäuseteil 16, beispielsweise über einen Drahtring 36, abstützen, die in einem radial mittleren, d. h. weiter innen gelegenen Bereich 38, die Anpressplatte 24 beaufschlagen und die in einem radial inneren Bereich durch einen Einrückkrafterzeugungsmechanismus beaufschlagt werden können, so dass sie - im Wesentlichen ohne einen eigenen wesentlichen Kraftbeitrag zu liefern - bei entsprechender Einrückkrafterzeugung mit ihrem radial mittleren Bereich 38 die Anpressplatte 24 beaufschlagen und dabei sich reaktionskraftmäßig am Gehäuseteil 16 abstützen.

Die Anpressplatte 24, die erste Kupplungsscheibe 26, die Zwischenplatte 20 und die erste Einrückkraftübertragungshebelanordnung 30 bilden zusammen im Wesentlichen einen ersten Kupplungsbereich 40 der Doppelkupplungsanordnung 10. Ein zweiter Kupplungsbereich 42 umfasst im Wesentlichen eine zweite Anpressplatte 44, die im Gehäuseteil 14 drehfest, bezüglich diesem jedoch axial verlagerbar getragen ist. Zwischen dieser zweiten Anpressplatte 44 und der Zwischenplatte 20 liegt eine zweite Kupplungsscheibe 46 mit ihren Reibbelägen 48. Ein ringartig ausgebildetes Einrückkraftübertragungselement 50 beaufschlagt die Anpressplatte 40. Dieses Einrückkraftübertragungselement 50 ist durch in der Fig. 1 nicht dargestellte, beispielsweise als Zuganker ausgebildete Verbindungselemente mit einem weiteren Einrückkraftübertragungselement 54 gekoppelt, das ebenso wie das Gehäuseteil 16 vorzugsweise als Blechumformteil ausgebildet ist. In einem Topfwandungsbereich ist dieses Einrückkraftübertragungselement 54 dann durch die angesprochenen Verbindungselemente mit dem Einrückkraftübertragungselement 50 gekoppelt. Eine sich z. B. über einen Drahtring 39 am Gehäuseteil 16 abstützende Einrückkraftübertragungshebelanordnung 31 mit in Umfangsrichtung aufeinander folgenden Hebelabschnitten 33 dient zur Kraftbeaufschlagung der Anpressplatte 44 mittels der angesprochenen Elemente.

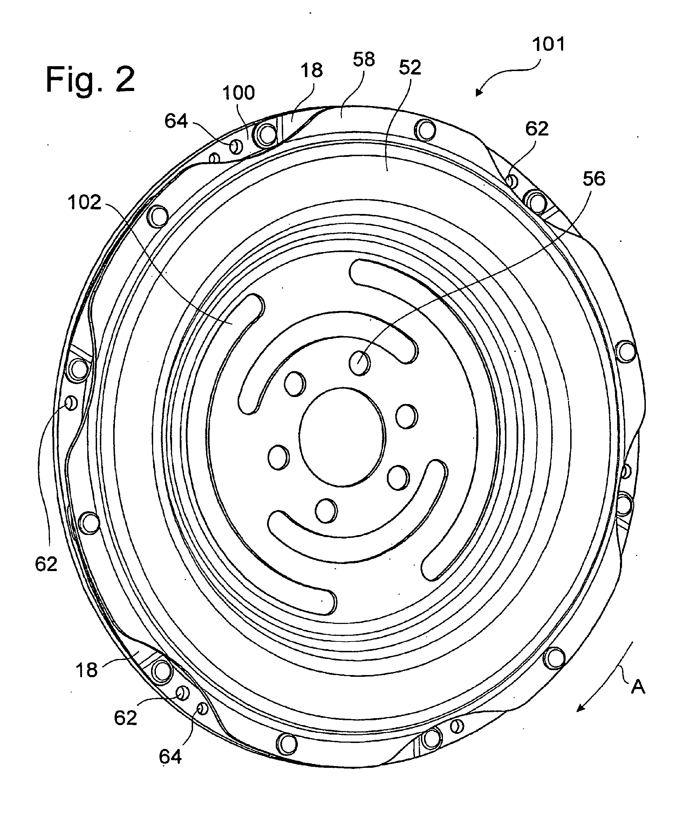

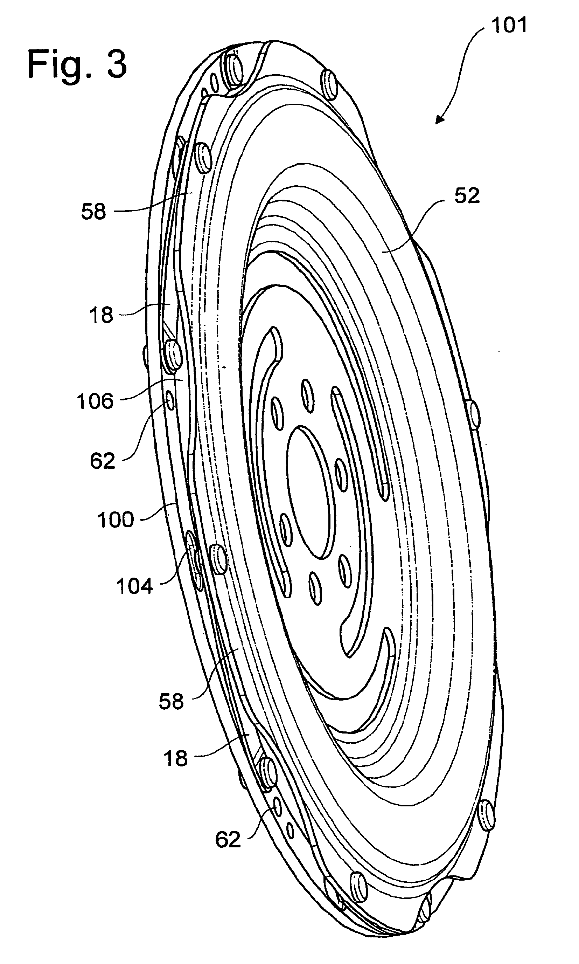

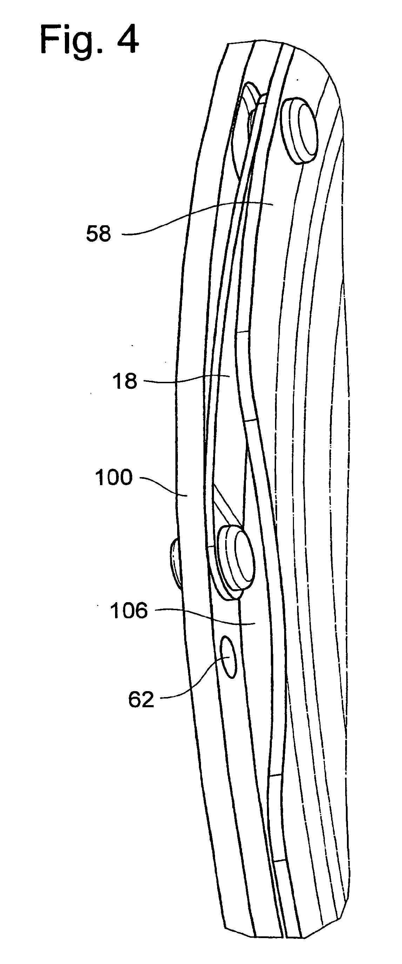

In den Fig. 2 bis 4 ist die Flexplatte 52 sowie deren motorseitige und kupplungsseitige Ankopplung etwas detaillierter gezeigt. Die Flexplatte 52 dient zusammen mit den Blattfedern 18 und dem Ringglied 100 als Verbindungseinrichtung zur Momentenübertragung zwischen motorseitiger Antriebswelle und der Kupplungsanordnung 10. Motorseitig und radial innen wird die Flexplatte 52 über Anbindungsöffnungen 56 angekoppelt, die beispielsweise als Durchgangslöcher ausgebildet sein können. Durch die Anbindungsöffnungen 56 können Schrauben gesteckt und die Flexplatte 52 dadurch drehmomentmäßig fest mit einem Antriebselement, beispielsweise mit einer Kurbelwelle, verbunden werden. Für besonders hohe Flexibilität weist die Flexplatte 52 in einem radial außerhalb der Anbindungsöffnung 56 liegenden Bereich langgestreckte, sich in Umfangsrichtung erstreckende Öffnungen auf, die der Flexplatte eine hohe Eigenflexibilität verleihen, so dass die Flexplatte axial zur Antriebsachse sowie senkrecht zu ihr eine deutliche Elastizität aufweist. In Umfangsrichtung bzw. Rotationsrichtung A ist die Flexplatte dagegen so steif, dass hohe Drehmomente übertragen werden können, ohne dass eine nennenswerte Deformation der Flexplatte 52 stattfindet.

In Abweichung von der Darstellung in Fig. 2 könnte die Flexplatte auch ohne die Öffnung 102 ausgeführt sein, so dass die Flexplatte eine entsprechend geringere Elastizität in axialer Richtung und senkrecht zur Antriebsachse aufweisen würde. Anstelle einer Flexplatte (flexible Platte) könnte auch grundsätzlich eine mehr oder weniger steife oder starre Antriebsplatte vorgesehen sein, die nur eine geringe oder keine Elastizität axial zur Antriebsachse und senkrecht zu dieser aufweist.

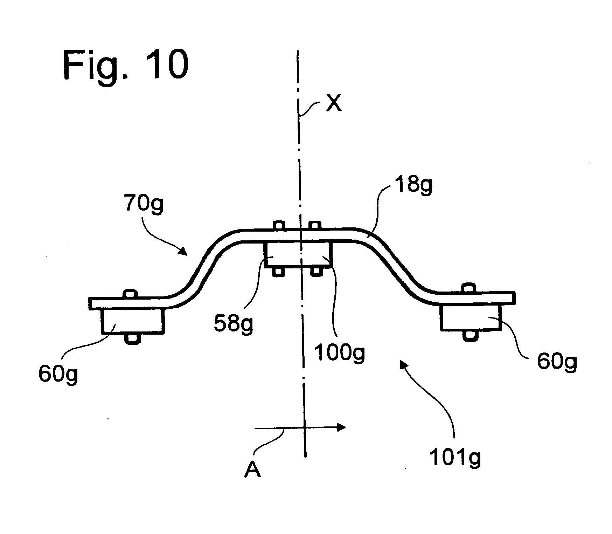

Zur Anbindung des Ringglieds 100 an der Flexplatte 52 mittels der Blattfedern 18 weist die Flexplatte 52 an ihrem äußeren Rand mehrere nach radial außen weisende Befestigungsflansche 58 auf, an denen die Blattfedern an einem Ende angebracht, beispielsweise festgenietet sind. Bei dem in Fig. 2 gezeigten Ausführungsbeispiel erstrecken sich die Blattfedern näherungsweise in Umfangsrichtung, und zwar jeweils von einem Befestigungsflansch 58 nur entgegengesetzt zur Umfangsrichtung A vom Befestigungsflansch 58 weg. Die Blattfedern 18 können dabei streifenartig linear oder streifenartig kreissegmentartig ausgebildet sein. Die Blattfedern 18 sind parallel zur Antriebsachse federelastisch und senkrecht zu ihr, insbesondere in Umfangsrichtung bzw. entgegengesetzt zur Umfangsrichtung, starr. Mit dieser Anordnung kann etwaig auftretender Achsversatz oder Schiefstand zwischen der Getriebeeingangswelle und der Antriebswelle (Kurbelwelle) ausgeglichen werden, wobei eine erste Ausgleichswirkung durch die topfartig ausgebildete Flexplatte 52 erreicht wird und eine zweite Ausgleichswirkung durch die elastische Ausbildung der Blattfedern 18 parallel zur Antriebsachse. Die Ausgleichswirkung der Blattfedern 18 könnte noch dadurch verstärkt werden, indem die Blattfedern gekröpft ausgebildet sind, beispielsweise ähnlich wie in Fig. 10 dargestellt.

Gemäß Fig. 1 und 2 sind die Blattfedern 18 durch geeignete Verbindungstechnik (z. B. Schrauben oder - schon erwähnt - Nieten) einerseits mit den jeweiligen Befestigungsflanschen 58 der Flexplatte 52 und andererseits nicht unmittelbar mit dem Gehäusebauteil 14 verbunden, sondern mit dem als Ringstab ausgeführten Ringglied 100, und zwar ebenfalls durch geeignete Verbindungstechnik (z. B. Schrauben oder Nieten). Das Ringglied 100 seinerseits ist durch geeignete Verbindungstechnik (z. B. Schrauben oder Nieten) mit dem Gehäuseteil 14 verbunden. Beim gezeigten Ausführungsbeispiel sind sechs Befestigungsflansche 58 rotationssymmetrisch zur Antriebsachse vorgesehen. Das Ringglied weist beidseitig eines jeweiligen Befestigungsflansches 58 jeweils eine Befestigungsöffnung 62 auf, durch die das Ringteil und damit die Blattfedern 18 und die Flexplatte 52 an einem Ringabschnitt oder jeweiligen kupplungsseitigen Flansch 60 des Gehäusebauteils 14 befestigbar ist. In Umfangsrichtung A weist das Ringglied 100 ferner in jedem zweiten einer Aussparung zwischen zwei Befestigungsflanschen 58 gegenüberliegenden Abschnitt eine Positionierungsöffnung 64 auf, in die ein kupplungsseitig vorgesehener Positionierungsstift einführbar ist. Der Positionierungsstift ist beispielsweise durch ein durchgehendes Positionierungsloch 62 des Ringglieds steckbar und vorzugsweise fest an dem Ringabschnitt oder dem jeweiligen kupplungsseitigen Befestigungsflansch 60 angebracht. Es kann jedoch auch umgekehrt vorgesehen sein, entsprechende Positionierungsstifte fest an dem Ringglied 18 anzubringen und diese in eine entsprechende kupplungsseitige Öffnung zu stecken. Durch die Positionierungselemente wird die Montagegenauigkeit der Übertragungsanordnung 101 an der Kupplungsanordnung 10 erhöht.

Die Positionierungsöffnungen 64 können insbesondere als Stiftbohrungen vorgesehen sein. Die zugeordneten Positionierungsstifte zum Einpassen in die Stiftbohrungen sind dann vorzugsweise so ausgebildet, dass sie nur einen geringfügig kleineren Durchmesser als die Stiftbohrungen haben, wodurch eine hohe Passgenauigkeit der Verbindung des Ringglieds mit der Kupplungsanordnung 10 und damit der gesamten Übertragungsanordnung mit der Kupplungsanordnung 10 erreichbar ist.

Es wird noch darauf hingewiesen, dass der in Bezug auf das Ringglied verwendete Begriff "Ringstab" aussagen soll, dass das Ringglied im Querschnitt stabartig ausgeführt ist, etwa entsprechend dem in Fig. 1 gezeigten Querschnitt des Ringglieds 100. Das Ringglied 100 erfüllt hier keine wesentliche axiale Überbrückungsfunktion, sondern dient alleine oder primär zur Erleichterung des Zusammenbaus des Kraftfahrzeug-Antriebsstrangs. Durch das Ringglied werden die Blattfedern 18 in ihrer SollPosition relativ zur Flexplatte 52 gehalten, und bei Anbringung der Flexplatte 52 an der Kurbelwelle steht das Ringglied als ordnungsgemäß positioniertes Element zur Montage an der Kupplung zur Verfügung, die nur noch in der richtigen Winkelstellung und richtiger Positionierung in radialer Richtung axial an das Ringglied 100 herangeführt werden muss, so dass die Befestigungsöffnungen 62 mit zugeordneten Befestigungsöffnungen des Ringabschnitts oder der Befestigungsflansche 60 des Gehäusebauteils 14 fluchten und dann durch geeignete Verbindungstechnik (z. B. Schrauben oder Nieten) die Verbindung hergestellt wird.

Es ist noch darauf hinzuweisen, dass das Ringglied 100 vorzugsweise mit Durchgangsöffnungen 104 ausgeführt ist, die einerseits das Vernieten der Blattfedern 18 mit einem jeweiligen Flanschabschnitt 58 erleichtern und andererseits die dem Ringglied 100 zugekehrten Nietköpfe im Zuge einer federnden Annäherung zwischen Ringglied 100 und den Flanschen 58 aufnehmen. Gleiche Funktionen haben die von zwei benachbarten Flanschen 58 zwischen sich definierten Aussparungen 106.

Im Folgenden werden weitere Ausführungsbeispiele einer erfindungsgemäßen Übertragungsanordnung und eines erfindungsgemäßen Kraftfahrzeug-Antriebsstrang-Abschnitts erläutert, soweit relevante Unterschiede zu den Ausführungsbeispielen der Fig. bis 4 bestehen. Es werden hierzu für analoge oder identische Komponenten und Bestandteile die gleichen Bezugszeichen wie für die Fig. 1 bis 4 verwendet, jeweils ergänzt um einen kleinen Buchstaben zur Kennzeichnung der Ausführungsform.

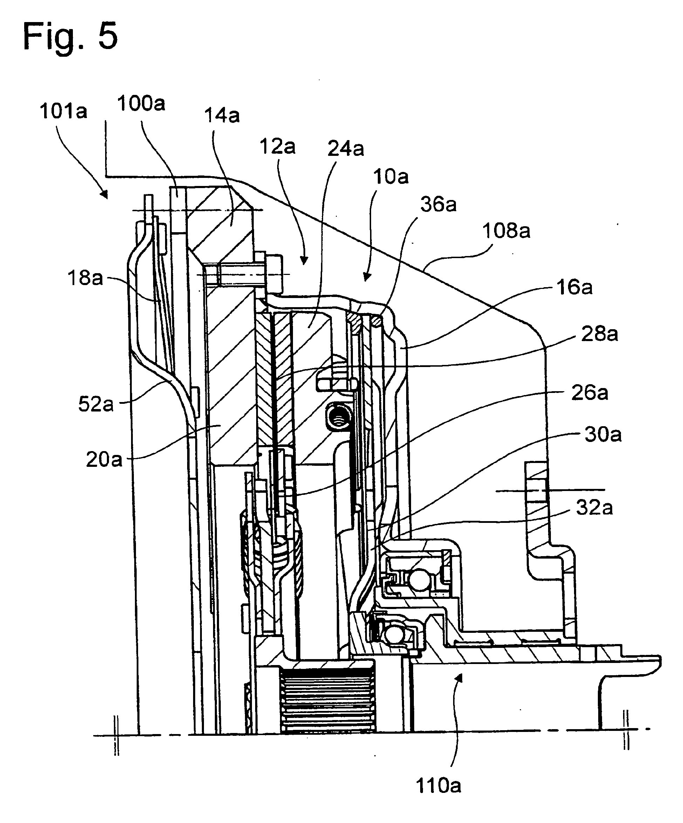

Fig. 5 zeigt eine Kupplungsanordnung 10a in Form einer Einfach-Kupplung, die in einer Gehäuseglocke 108a angeordnet ist. Diese Kupplungsanordnung 10 umfasst eine Gehäuseanordnung 12a, die das Gehäusebauteil 14a und das Gehäusebauteil 16a umfasst. Das insbesondere als Gussteil hergestellte Gehäusebauteil 14a dient als Widerlagerplatte 20a. Die Reibbeläge 28a sind zwischen der Widerlagerplatte 20a und der im Gehäuse axial verlagerbaren Anpressplatte 24a einspannbar. Zur axialen Verlagerung der Anpressplatte 24a ist eine Einrückkraftübertragungshebelanordnung 30a vorgesehen, die genauso wie beim Ausführungsbeispiel der Fig. 1 funktioniert. Zur Betätigung der Hebelabschnitte 32a dient ein Betätigungsmodul 110a, das über ein Einrücklager auf die Hebelabschnitte 32 wirkt und über ein Stützlager an einem radial inneren Flanschabschnitt des Gehäusebauteils 16a abgestützt ist, wie an sich bekannt.

Beim Ausführungsbeispiel der Fig. 5 ist eine Übertragungsanordnung 101 b vorgesehen, die zur Anbindung der Kupplung an der Antriebswelle einer Antriebseinheit, insbesondere Brennkraftmaschine, dient. Wie beim Ausführungsbeispiel der Fig. 1 bis 4 ist die Übertragungsanordnung von einer Flexplatte 52a und einem Ringglied 100a und diese verbindenden Blattfedern 18a gebildet. Es wird auf die Darstellung in den Fig. 2 bis 4 verwiesen.

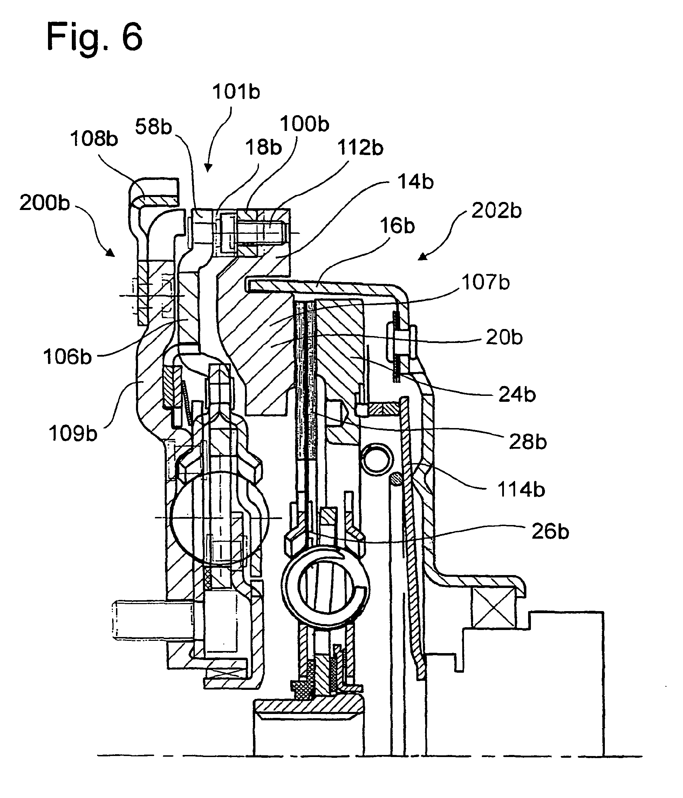

Fig. 6 zeigt ein Ausführungsbeispiel eines erfindungsgemäßen Antriebsstrang-Abschnitts, der eine erste Baueinheit 200b und eine zweite Baueinheit 202b aufweist. Die erste Baueinheit 202b ist beim Ausführungsbeispiel als trockenlaufendes Zwei-Massen-Schwungrad ausgeführt, das mit seinem Primärschwungrad 109b mit der Kurbelwelle einer Brennkraftmaschine verbunden bzw. verbindbar ist. Die zweite Baueinheit ist als Einfach-Kupplungseinheit ausgeführt, und zwar vorliegend vom NORMALERWEISE-OFFEN-Typ.

Es ist darauf hinzuweisen, dass in Abweichung von der Darstellung in Fig. 6 das Zwei-Massen-Schwungrad mittels einer Übertragungsanordnung ähnlich dem Ausführungsbeispiel der Fig. 2 bis 4 an der Kurbelwelle angebunden sein könnte.

Zur axialen Schwingungsentkopplung sind die beiden Baueinheiten nicht starr miteinander verbunden, sondern mittels Blattfedern 18b, die einerseits an radial vorstehenden Flanschabschnitten 58b einer Nabenscheibe 106b angebracht, beispielsweise angenietet sind. Andererseits sind die Blattfedern, beispielsweise Tangentialblattfedern, nicht unmittelbar an einem Gehäuseteil 14b der Kupplungsbaueinheit angebunden, sondern vermittels eines als Ringstab ausgeführten Ringglieds 100b. Die Blattfedern 18b und das Ringglied 100b bilden eine Ausführungsform einer erfindungsgemäßen Übertragungsanordnung.

Die Übertragungsanordnung 101b bewirkt eine axiale Schwingungsentkopplung. Für den Zusammenbau des Antriebsstrangs ist die Übertragungsanordnung 101b vorzugsweise bereits an der Nabenscheibe 106b des Zwei-Massen-Schwungrads vormontiert. Es ist allerdings auch denkbar, die Übertragungsanordnung 101b umgedreht im Antriebsstrang anzuordnen und diese am als Sekundärschwungrad 107b dienenden Kupplungsgehäuseteil 14b vorzumontieren.

Wieder Bezug nehmend auf die Anordnung gemäß Fig. 6 werden beim Zusammenbau dieses Antriebsstrangs das Zwei-Massen-Schwungrad (ZMS) und die Kupplung durch eine Verschraubung zwischen dem Ringglied 100b und dem Sekundärschwungrad 107b verbunden. Dieses Verschrauben kann vorteilhaft von der Motorseite erfolgen. Es können hierzu radiale/axiale Durchführungen vorgesehen sein, die genügend Platz für einen Schrauber zur Verfügung stellen. Es können insbesondere entsprechende Ausnehmungen in den einzelnen zu passierenden Bauteilen vorgesehen sein. Beispielsweise kann ein im Ausführungsbeispiel aus Blech ausgeführter Anlasserzahnkranz 108b mit Durchlassöffnungen, beispielsweise in Form von Ausstanzungen, ausgeführt sein. Das Primärschwungrad 109b, an dem der Anlasserzahnkranz 108b angebracht ist, kann ebenfalls mit entsprechenden Durchführungen ausgeführt sein. Beispielsweise kann das Primärschwungrad im Falle einer Ausführung als Blechteil mit ausgestanzten Durchlässen ausgeführt seien. Im Falle von einer Ausführung des Primärschwungrads und des Anlasserzahnkranzes als Gussteil bzw. Gussteilen können entsprechende Öffnungen von vornherein eingegossen werden.

Wie schon angesprochen, ist gemäß Fig. 6 das Sekundärschwungrad 107b mit der Kupplung vormontiert oder - genauer - als integraler Bestandteil der Kupplung anzusehen. Das Gehäuseteil 16b kann vorteilhaft in das Sekundärschwungrad 107 eingepresst sein. Diese Pressverbindung kann radial innerhalb der Verschraubung des Ringglieds 100b mit dem Sekundärschwungrad 107b liegen. Es sind im Prinzip diverse Ausführungsvarianten denkbar.

Die Verschraubung des Ringglieds 100b mit dem Sekundärschwungrad 107b erfolgt durch mehrere in Umfangsrichtung verteilt angeordnete Schrauben 112b, die in eine jeweilige Schrauböffnung mit Innengewinde des Schwungrads 107b eingeschraubt sind. Alternativ ist auch eine Pressverbindung durch in entsprechende Öffnungen eingepresste Verbindungsbolzen denkbar. Das Gehäuseteil 16b könnte auch außerhalb der Verschraubung bzw. Verbindung auf das Schwungrad 107b aufgepresst sein. Es sind auch andere Verbindungstechniken zwischen den beiden Gehäuseteilen denkbar.

Das Einrücken der Kupplung erfolgt durch eine beispielsweise als Membranfeder ausgeführten Kraftspeicher 114b, der ohne Beaufschlagung durch ein Betätigungsmodul die Anpressplatte 24b gegen die Reibbeläge 28b der Kupplungsscheibe 26b drückt. Zum Auskuppeln drückt ein Betätigungsmodul radial innen liegende Federzungenende der Membranfeder in Richtung zur Antriebseinheit, wodurch die Anpressplatte 24b entlastet wird und unter der Wirkung von Lüftfedern von den Reibbelägen abhebt. Ein Abstützlager zwischen einem radial inneren Flanschabschnitt des Gehäuseteils 16b und dem Betätigungsmodul sorgt für einen geschlossenen Kraftfluss, so dass beim Betätigen der Kupplung keine auf die wirkenden Betätigungskräfte zurückzuführende axiale Kräfte zwischen den beiden Baueinheiten wirken, also die Übertragungsanordnung 101 b nicht axial belastet wird.

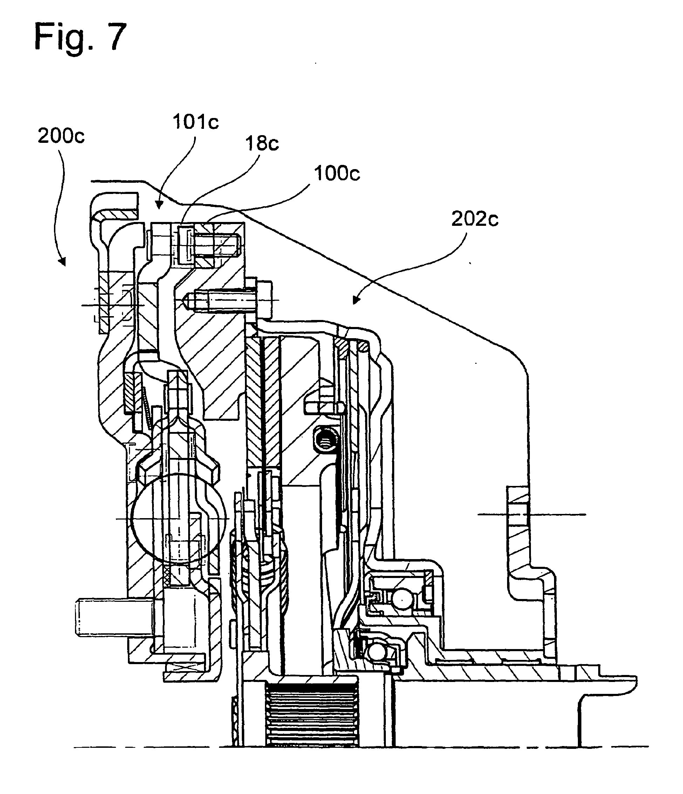

Fig. 7 zeigt ein weiteres Beispiel eines Antriebsstrang-Abschnitts mit einem Zwei-Massen-Schwungrad 200c und einer Kupplung 202c, vorliegend ebenfalls eine Einfach-Kupplung des NORMALERWEISE-OFFEN-Typs. Die beiden Baueinheiten sind über eine eine axiale Schwingungsentkopplung liefernden Übertragungsanordnung 101c gekoppelt, die im Wesentlichen der Übertragungsanordnung 101 b gemäß Fig. 6 entspricht.

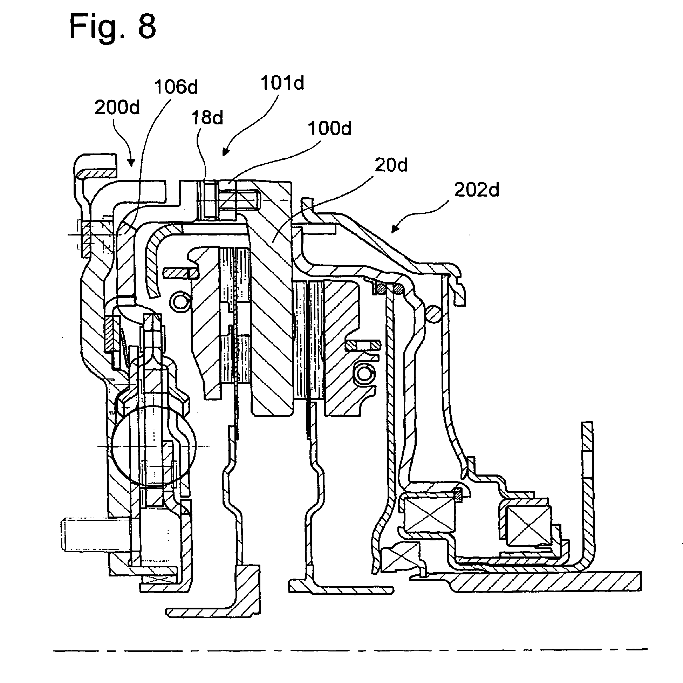

Fig. 8 zeigt ein Ausführungsbeispiel, bei dem eine getriebeseitig angeordnete trockene Doppelkupplung 202d in Verbindung mit einem Zwei-Massen-Schwungrad 200d angeordnet ist. Die Kopplung zwischen den beiden Baueinheiten erfolgt durch eine Übertragungsanordnung 101d, die ein kupplungsseitig, an einer Zwischenplatte angeordnetes Ringglied 100d und von diesem sich zu radial außen liegenden Befestigungsflanschen einer Nabenscheibe 106d des Zwei-Massen-Schwungrads 200d erstreckenden Blattfedern 18d aufweist, wie bei den Beispielen gemäß Fig. 7 und 8. Die Übertragungsanordnung 101d erfüllt also ebenfalls eine Schwingungsentkopplungsfunktion in Bezug auf axiale Schwingungen. Alle beschriebenen Übertragungsanordnungen 101, 101a, 101b, 101c und 101d erfüllen zusätzlich auch eine Taumelentkopplungsfunktion.

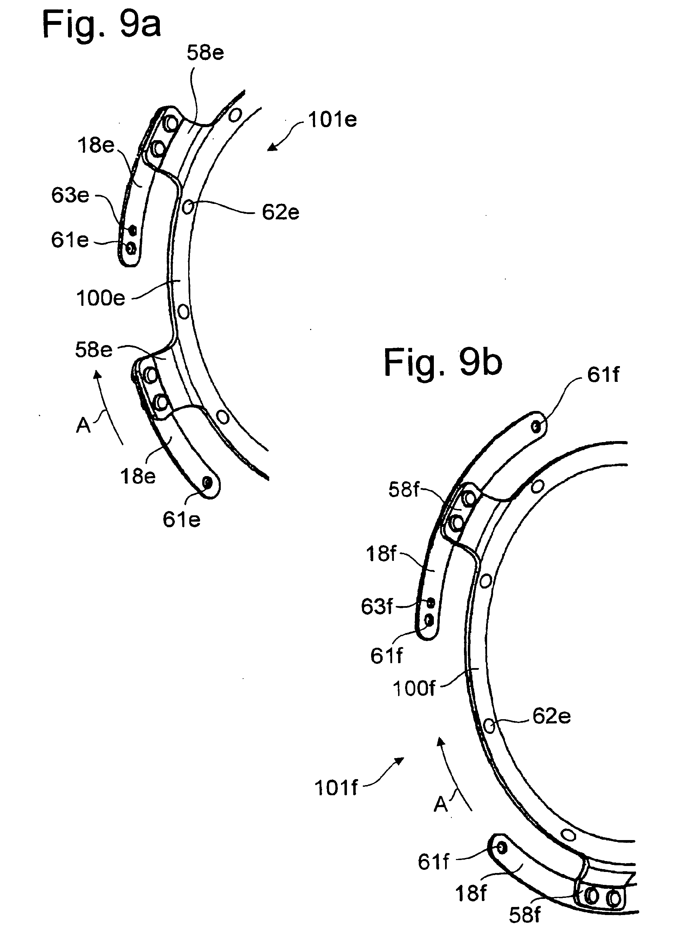

In den Fig. 9a und 9b sind Ausführungsvarianten von erfindungsgemäßen Übertragungsanordnungen 101e und 101f dargestellt, die ein jeweiliges Ringglied 100e bzw. 100f und Blattfedern 18e bzw. 18f aufweisen. Diese sind derart an einem jeweiligen Befestigungsflansch 58e bzw. 58f des Ringglieds befestigt, dass sie sich im Falle des Ausführungsbeispiels der Fig. 9a vom jeweiligen Befestigungsflansch 58e jeweils entgegengesetzt zur Umfangsrichtung A erstrecken bzw. im Ausführungsbeispiel der Fig. 9b sich vom jeweiligen Befestigungsflansch 58f sowohl in Umfangsrichtung A als auch entgegengesetzt zur Umfangsrichtung A vom Befestigungsflansch erstrecken. An einem jeweiligen Ende der Blattfedern 18e und 18f sind Öffnungen zur Befestigung der Blattfeder an einer zugeordneten Baueinheit eines Kraftfahrzeug-Antriebsstrangs vorgesehen. Die Öffnungen sind mit 61 e bzw. 61f bezeichnet. Zusätzlich können Öffnungen 63e bzw. 63f vorgesehen sein, in die an der betreffenden Baueinheit vorgesehene Positionierungsstifte einführbar sind, um die Übertragungsanordnung 101 e bzw. 101f leichter an der zugeordneten Baueinheit montieren zu können. Bei der Baueinheit kann es sich beispielsweise um eine Kupplung oder um ein Zwei-Massen-Schwungrad, oder auch um eine Antriebsplatte, beispielsweise eine so genannte Flexplatte, handeln. In diesem Fall kann man zweckmäßig die Flexplatte als Teil der Übertragungsanordnung ansehen, und die die Flexplatte umfassende Übertragungsanordnung ist vorzugsweise vollständig vormontiert, bevor die Flexplatte antriebsseitig montiert wird. Anschließend kann dann beispielsweise eine Baueinheit etwa in Form einer Kupplung mit dem Ringglied 100e bzw. 100f verbunden werden. Hierzu weist das Ringglied Befestigungsöffnungen 62e bzw. 62f auf.

In Fig. 10 ist eine Momentenübertragungsanordnung gezeigt, bei der an Flanschen 58g eines ansonsten nicht dargestellten Ringteils in beiden Umfangsrichtungen gekröpfte Blattfedern 18g eingesetzt sind. Kupplungsseitig sind die Blattfedern an Befestigungsflanschen 60g beispielsweise eines Gehäuseteils entsprechend dem Gehäuseteil 14 gemäß Fig. 1 befestigt. Alternativ könnten die Befestigungsflansche 60g zu einer beispielsweise motorseitig zu montierenden Flexplatte gehören. Aufgrund ihrer S-Form im Übergangsbereich 70g zwischen den Befestigungsflanschen 58g und 60g sind die Blattfedern entlang der Drehachse X und senkrecht zu ihr elastisch, wodurch sie - wenn vorgesehen ebenso wie die Flexplatte selbst - sowohl Schwingungen entlang der Drehachse X dämpfen können als auch Taumelbewegungen, die durch Achsschiefstand hervorgerufen werden, besonders gut aufnehmen können. In Umfangsrichtung A sind die Blattfedern hingegen hinreichend steif.

Es wurden Ausführungsbeispiele der Erfindung beschrieben. Dabei ist klar, dass der Fachmann jederzeit Weiterbildungen und Modifikationen angeben kann, die von der Erfindung Gebrauch machen. Beispielsweise können statt der in den Ausführungsbeispielen gezeigten, gekrümmt ausgebildeten Blattfedern auch Blattfedern linear-streifenförmiger Form verwendet werden, so dass sie sich näherungsweise tangential zum Ringglied bzw. der daran ausgebildeten Flansche und entsprechend - wenn vorgesehen - näherungsweise tangential zum Umfang der Flexplatte bzw. der daran ausgebildeten Flansche erstrecken. Außerdem sind weitere Formgestaltungen, wie z. B. eine kreissegmentartige Form, angebbar.

## Patentansprüche

1. Übertragungsanordnung zur Momentenübertragung zwischen zwei im Momentenübertragungsverbindung zu bringenden oder stehenden Baueinheiten eines Kraftfahrzeug-Antriebsstrangs, umfassend ein topfartiges Verbindungsglied (52; 52a), das zentrisch fest mit einer Drehkomponente, insbesondere Drehwelle, einer Baueinheit des Antriebsstrangs, etwa einer Antriebswelle eines Getriebes oder Abtriebswelle einer Antriebseinheit, zu verbinden ist, eine Mehrzahl von elastischen Verbindungselementen (18; 18a; ...; 18g), die zumindest im im Antriebsstrang montierten Zustand sich bezogen auf einen Umfang näherungsweise in Umfangsrichtung (A) oder in Tangentialrichtung um eine Achse der Übertragungsanordnung erstrecken, die im im Antriebsstrang montierten Zustand zumindest näherungsweise einer Drehachse des Antriebsstrangs entspricht, wobei
die Übertragungsanordnung (101; 101a; ...; 101g) ein mit einer der Baueinheiten gekoppeltes oder koppelbares Ringglied (100; 100a; ...; 100g) umfasst, mit dem die elastischen. Verbindungselemente fest verbunden sind, wobei die Verbindungselemente von einer Ringfläche oder einem jeweiligen Flächenabschnitt des Ringliedes ausgehend in Richtung der Achse vorstehen, **dadurch gekennzeichnet, dass** das topfartige Verbindungsglied (52; 52a) als Flexplatte ausgebildet ist.

2. Übertragungsanordnung nach Anspruch 1, **dadurch gekennzeichnet, dass** das Ringglied (100; 100a; ...)als Ringscheibenglied oder Ringstabglied ausgeführt ist, dessen Erstreckung in radialer Richtung seine Erstreckung in axialer Richtung deutlich übersteigt.

3. Übertragungsanordnung nach Anspruch 1 oder 2, **dadurch gekennzeichnet, dass** die Verbindungselemente (18; 18a; ...) parallel zur Achse der Übertragungsanordnung elastisch sind und senkrecht zur Achse, insbesondere in Umfangsrichtung (A) bzw. Tangentialrichtung, starr.

4. Übertragungsanordnung nach einem der Ansprüche 1 bis 3, **dadurch gekennzeichnet, dass** wenigstens ein Verbindungselement (18; 18a; ...) wenigstens eine streifenartige Blattfeder, ggf. sogenannte Tangentialblattfeder, umfasst.

5. Übertragungsanordnung nach Anspruch 1, **dadurch gekennzeichnet, dass** das Ringteil (100b; 100c; 100d; 100e; 100f; 100g) zur Verbindung mit der einen Baueinheit und die Verbindungselemente (18b; 18c; 18d; 18e; 18f; 18g) zur Verbindung mit der anderen Baueinheit vorgesehen sind.

6. Übertragungsanordnung nach Anspruch 1, **dadurch gekennzeichnet, dass** die Übertragungselemente (18; 18a) fest mit dem Verbindungsglied (52; 52a) verbunden sind, zur Momentenübertragung zwischen dem Ringglied (100; 100a) und dem Verbindungsglied.

7. Übertragungsanordnung nach einem der Ansprüche 1 bis 4, **dadurch gekennzeichnet, dass** zwei Ringglieder vorgesehen sind, zwischen denen sich die Verbindungselemente erstrecken, zur Momentenübertragung zwischen den Ringgliedern.

8. Übertragungsanordnung nach Anspruch 7, **dadurch gekennzeichnet, dass** ein Ringglied zur Verbindung mit der einen Baueinheit und das andere Ringglied zur Verbindung mit der anderen Baueinheit vorgesehen ist.

9. Übertragungsanordnung nach einem der Ansprüche 1 bis 8, **dadurch gekennzeichnet, dass** die Verbindungselemente (18; 18a; ...) an dem Ringglied (100; 100a; ...) formschlüssig angebracht sind, vorzugsweise mit diesem verschraubt oder vernietet sind.

10. Übertragungsanordnung nach einem der Ansprüche 1 bis 9, rückbezogen zumindest auf Anspruch 7, dass die Verbindungselemente (18; 18a) an dem Verbindungsglied (52; 52a) formschlüssig angebracht sind, vorzugsweise mit diesem verschraubt oder vernietet sind.

11. Kraftfahrzeug-Antriebsstrang oder Kraftfahrzeug-Antriebsstrang-Abschnitt umfassend wenigstens eine Übertragungsanordnung (101; 101a; ...) nach einem der Ansprüche 1 bis 10 zwischen zwei zugeordneten Baueinheiten der Gruppe:
- Antriebseinheit, insbesondere Brennkraftmaschine; Kupplungseinheit, gewünschtenfalls Doppelkupplungseinheit; Getriebe, gegebenenfalls Lastschaltgetriebe; Torsionsschwingungsdämpfereinheit, insbesondere Zwei-Massen-Schwungrad-Einheit.

12. Kraftfahrzeug-Antriebsstrang insbesondere nach Anspruch 11, umfassend wenigstens eine Übertragungsanordnung (101; 101a; ...) nach einem der Ansprüche 1 bis 10 und eine direkt oder indirekt über die Übertragungsanordnung mit einer Antriebseinheit in Momentenübertragungsverbindung stehenden Kupplungseinheit (10; 10a; 202c; 202d), gewünschtenfalls Doppelkupplungseinheit.

13. Kraftfahrzeug-Antriebsstrang nach Anspruch 12 oder 12 mit einer Übertragungsanordnung zumindest nach Anspruch 7, die das Verbindungsglied (52; 52a) aufweist, das auf Seiten einer Antriebseinheit des Antriebsstrangs angeordnet und mit einer Antriebswelle der Antriebseinheit verbunden ist.

14. Kraftfahrzeugantriebsstrang nach einem der Ansprüche 12 bis 13, mit einer Torsionsschwingungsdämpfereinheit, insbesondere Zwei-Massen-Schwungrad-Einheit (200b; 200c; - 200d), die antriebseinheitsseitig angeordnet ist.

15. Verfahren zum Zusammenbauen eines Kraftfahrzeug-Antriebsstrangs oder Kraftfahrzeug-Antriebstrang-Abschnitts, insbesondere nach einem der Ansprüche 11 bis 14, **gekennzeichnet durch** die Schritte:
- Bereitstellen wenigstens einer Übertragungsanordnung (101; 101a; ...; 101 g) nach einem der Ansprüche 1 bis 13,
- Montieren der Übertragungsanordnung an einer von zwei der mittels der Übertragungsanordnung in Momentenübertragungsverbindung zu bringenden Baueinheiten, derart, dass das Ringteil (100; 100a; ...; 100g) oder eines der Ringteile für die Koppelung mit der anderen der beiden Baueinheiten bereit steht,
- Heranführen der anderen der beiden Baueinheiten an das Ringteil,
- Verbinden des Ringteils mit der anderen der beiden Baueinheiten, um die Momentenübertragungsverbindung herzustellen.

## Claims

1. Transmission assembly for transmitting torque between two units of a motor vehicle drive train which are to be brought into or are in torque-transmitting connection, comprising a cup-like connecting member (52; 52a), which is to be connected centrally and firmly to a rotary component, in particular a rotary shaft, of a unit of the drive train, for instance a drive shaft of a transmission or a driven shaft of a drive unit, further comprising a plurality of flexible connecting elements (18; 18a;...; 18g), which, at least after installation in the drive train, extend approximately in the circumferential direction (A) or the tangential direction relative to a circumference, around an axis of the transmission assembly which corresponds at least approximately to an axis of rotation of the drive train after installation in the drive train, the transmission assembly (101; 101a;...; 101g) comprising an annular member (100; 100a;...; 100g), which is coupled or can be coupled to one of the units and to which the flexible connecting elements are firmly connected, the connecting elements starting from an annular surface or a respective surface area of the annular member and projecting in the direction of the axis, **characterized in that** the cup-like connecting member (52; 52a) is designed as a flex plate.

2. Transmission assembly according to Claim 1, **characterized in that** the annular member (100; 100a;...) is embodied as an annular disc member or annular rod member, the extent of which in the radial direction significantly exceeds the extension thereof in the axial direction.

3. Transmission assembly according to Claim 1 or 2, **characterized in that** the connecting elements (18; 18a;...) are flexible parallel to the axis of the transmission assembly and rigid perpendicularly to the axis, in particular in the circumferential direction (A) or tangential direction.

4. Transmission assembly according to one of Claims 1 to 3, **characterized in that** at least one connecting element (18; 18a; ...) comprises at least one strip-type leaf spring or so-called tangential leaf spring.

5. Transmission assembly according to Claim 1, **characterized in that** the annular part (100b; 100c; 100d; 100e; 100f; 100g) is provided for connection to one unit and the connecting elements (18b; 18c; 18d; 18e; 18f; 18g) are provided for connection to the other unit.

6. Transmission assembly according to Claim 1, **characterized in that** the transmission elements (18; 18a) are firmly connected to the connecting member (52; 52a) in order to transmit torque between the annular member (100; 100a) and the connecting member.

7. Transmission assembly according to one of Claims 1 to 4, **characterized in that** two annular members are provided, between which the connecting elements extend, in order to transmit torque between the annular members.

8. Transmission assembly according to Claim 7, **characterized in that** one annular member is provided for connection to one unit and the other annular member is provided for connection to the other unit.

9. Transmission assembly according to one of Claims 1 to 8, **characterized in that** the connecting elements (18; 18a;...) are attached positively to the annular member (100; 100a;...), preferably being screwed or riveted to the latter.

10. Transmission assembly according to one of Claims 1 to 9, referring back at least to Claim 7, **characterized in that** the connecting elements (18, 18a) are attached positively to the connecting member (52; 52a), preferably being screwed or riveted to the latter.

11. Motor vehicle drive train or motor vehicle drive train section comprising at least one transmission assembly (101; 101a;...) according to one of Claims 1 to 10 between two associated units from the following group:
- drive unit, in particular internal combustion engine; clutch unit, if desired dual clutch unit; transmission, if appropriate power shift transmission; torsional vibration damper unit, in particular dual-mass flywheel unit.

12. Motor vehicle drive train, in particular according to Claim 11, comprising at least one transmission assembly (101; 101a;...) according to one of Claims 1 to 10 and a clutch unit (10; 10a; 202c; 202d), if desired dual clutch unit, in torque-transmitting connection with a drive unit, either directly or indirectly via the transmission assembly.

13. Motor vehicle drive train according to Claim 11 or 12, having a transmission assembly at least according to Claim 7, which has the connecting member (52, 52a), which is arranged on the same side as a drive unit of the drive train and is connected to a drive shaft of the drive unit.

14. Motor vehicle drive train according to one of Claims 12 to 13, having a torsional vibration damper unit, in particular dual-mass flywheel unit (200b; 200c; 200d), which is arranged on the drive unit side.

15. Method for assembling a motor vehicle drive train or motor vehicle drive train section, in particular according to one of Claims 11 to 14, **characterized by** the following steps:
- provision of at least one transmission assembly (101; 101a;...; 101g) according to one of Claims 1 to 13,
- installation of the transmission assembly on one of two of the units to be brought into torque-transmitting connection by means of the transmission assembly, in such a way that the annular part (100; 100a;...; 100g) or one of the annular parts is ready for coupling to the other of the two units,
- moving the other of the two units up to the annular part,
- connecting the annular part to the other of the two units in order to establish the torque-transmitting connection.

## Revendications

1. Système de transmission pour la transmission de couple entre deux composants d'une chaîne cinématique d'un véhicule automobile étant ou devant être amenés en liaison de transmission de couple, comprenant un organe de connexion de type pot (52 ; 52a), qui doit être connecté centralement et fixement à un composant rotatif, notamment un arbre de rotation, d'un composant de la chaîne cinématique, par exemple un arbre d'entraînement d'une transmission ou un arbre de prise de force d'une unité d'entraînement, une pluralité d'éléments de connexion élastiques (18 ; 18a; ... ; 18g), qui, au moins dans l'état monté dans la chaîne cinématique, s'étendent par rapport à une périphérie, approximativement dans la direction périphérique (A) ou dans la direction tangentielle autour d'un axe du système de transmission, qui correspond, dans l'état monté dans la chaîne cinématique, au moins approximativement à un axe de rotation de la chaîne cinématique,
le système de transmission (101 ; 101a ; ... ; 101g) comprenant un organe annulaire (100 ; 100a ; ... ; 100g) accouplé ou pouvant être accouplé à l'un des composants, auquel sont connectés fixement les éléments de connexion élastiques, les éléments de connexion faisant saillie depuis une surface annulaire ou une portion de surface respective de l'organe annulaire dans la direction de l'axe, **caractérisé en ce que** l'organe de connexion en forme de pot (52 ; 52a) est réalisé sous forme de plaque flexible.

2. Système de transmission selon la revendication 1, **caractérisé en ce que** l'organe annulaire (100 ; 100a ; ...) est réalisé sous forme d'organe de disque annulaire ou d'organe de barre annulaire, dont l'étendue dans la direction radiale dépasse largement son étendue dans la direction axiale.

3. Système de transmission selon la revendication 1 ou 2, **caractérisé en ce que** les éléments de connexion (18 ; 18a ; ...) sont élastiques parallèlement à l'axe du système de transmission et sont rigides perpendiculairement à l'axe, notamment dans la direction périphérique (A) ou la direction tangentielle.

4. Système de transmission selon l'une quelconque des revendications 1 à 3, **caractérisé en ce qu'**au moins un élément de connexion (18 ; 18a ; ...) comprend au moins un ressort à lame en forme de ruban, éventuellement ce qu'on appelle un ressort à lame tangentiel.

5. Système de transmission selon la revendication 1, **caractérisé en ce que** la partie annulaire (100b ; 100c ; 100d ; 100e ; 100f ; 100g) est prévue pour être connectée à l'un des composants et les éléments de connexion (18b ; 18c ; 18d ; 18e ; 18f ; 18g) sont prévus pour être connectés à l'autre composant.

6. Système de transmission selon la revendication 1, **caractérisé en ce que** les éléments de transmission (18 ; 18a) sont connectés fixement à l'organe de connexion (52 ; 52a), pour la transmission de couple entre l'organe annulaire (100 ; 100a) et l'organe de connexion.

7. Système de transmission selon l'une quelconque des revendications 1 à 4, **caractérisé en ce que** deux organes annulaires sont prévus, entre lesquels s'étendent les éléments de connexion, pour la transmission du couple entre les organes annulaires.

8. Système de transmission selon la revendication 7, **caractérisé en ce qu'**un organe annulaire est prévu pour être connecté à l'un des composants et l'autre organe annulaire est prévu pour être connecté à l'autre composant.

9. Système de transmission selon l'une quelconque des revendications 1 à 8, **caractérisé en ce que** les éléments de connexion (18 ; 18a ; ...) sont montés par engagement par coopération de forme sur l'organe annulaire (100 ; 100a ; ...), de préférence sont vissés ou rivetés à celui-ci.

10. Système de transmission selon l'une quelconque des revendications 1 à 9, lorsqu'elles se rapportent au moins à la revendication 7, **caractérisé en ce que** les éléments de connexion (18 ; 18a) sont montés par engagement par coopération de forme sur l'organe de connexion (52 ; 52a), de préférence sont vissés ou rivetés à celui-ci.

11. Chaîne cinématique de véhicule automobile ou portion de chaîne cinématique de véhicule automobile, comprenant au moins un système de transmission (101 ; 101a ; ...) selon l'une quelconque des revendications 1 à 10, entre deux composants associés du groupe suivait :
- une unité d'entraînement, notamment un moteur à combustion interne ; une unité d'accouplement, si on le souhaite une unité à double embrayage ; une transmission, éventuellement une transmission à changement de rapports sous charge ; une unité d'amortissement des vibrations de torsion, en particulier une unité de roue volante à deux masses.

12. Chaîne cinématique de véhicule automobile, en particulier selon la revendication 11, comprenant au moins un système de transmission (101 ; 101a ; ...) selon l'une quelconque des revendications 1 à 10, et une unité d'accouplement (10 ; 10a ; 202c ; 202d) en liaison de transmission de couple directe ou indirecte par le biais du système de transmission avec une unité d'entraînement, si on le souhaite une unité à double embrayage.

13. Chaîne cinématique de véhicule automobile selon la revendication 11 ou 12, comprenant un système de transmission selon au moins la revendication 7, qui présente l'organe de connexion (52 ; 52a), qui est disposé du côté d'une unité d'entraînement de la chaîne cinématique et qui est connecté à un arbre d'entraînement de l'unité d'entraînement.

14. Chaîne cinématique de véhicule automobile selon l'une quelconque des revendications 12 à 13, comprenant une unité d'amortissement des vibrations de torsion, en particulier une unité de roue volante à deux masses (200b ; 200c ; 200d), qui est disposée du côté de l'unité d'entraînement.

15. Procédé pour assembler une chaîne cinématique de véhicule automobile ou une portion de chaîne cinématique de véhicule automobile, en particulier selon l'une quelconque des revendications 11 à 14, **caractérisé par** les étapes consistant à :
- fournir au moins un système de transmission (101 ; 101a ; ... ; 101g) selon l'une quelconque des revendications 1 à 13,
- monter le système de transmission sur l'un de deux composants à amener en liaison de transmission de couple au moyen du système de transmission de telle sorte que la partie annulaire (100 ; 100a ; ... 100g) ou l'une des parties annulaires soit prête pour l'accouplement avec l'autre des deux composants,
- rapprocher l'autre des deux composants de la partie annulaire,
- connecter la partie annulaire à l'autre des deux composants, afin d'établir la connexion de transmission de couple.
